(19) Europäisches Patentamt
European Patent Office
Office européen des brevets

(11) Veröffentlichungsnummer : **0 093 334**
**B1**

(12) # EUROPÄISCHE PATENTSCHRIFT

(45) Veröffentlichungstag der Patentschrift : **12.11.86**

(51) Int. Cl.[4] : **C 08 G 18/14**, C 08 G 18/32, C 08 G 18/50, C 08 G 18/65, B 29 C 67/24

(21) Anmeldenummer : **83103896.3**

(22) Anmeldetag : **21.04.83**

(54) **Verfahren zur Herstellung von gegebenenfalls zellhaltigen Formkörpern aus Polyharnstoff-Elastomeren.**

(30) Priorität : **29.04.82 DE 3215909**

(43) Veröffentlichungstag der Anmeldung : **09.11.83 Patentblatt 83/45**

(45) Bekanntmachung des Hinweises auf die Patenterteilung : **12.11.86 Patentblatt 86/46**

(84) Benannte Vertragsstaaten : **BE DE FR GB IT NL SE**

(56) Entgegenhaltungen :
**EP-A- 0 081 701**
**EP-A- 0 093 862**
**GB-A- 1 505 220**

(73) Patentinhaber : **BASF Aktiengesellschaft**
**Carl-Bosch-Strasse 38**
**D-6700 Ludwigshafen (DE)**

(72) Erfinder : **Nissen, Dietmar, Dr.**
**Ziegelhaeuser Landstrasse 31**
**D-6900 Heidelberg (DE)**
Erfinder : **Schoenleben, Willibald, Dr.**
**Blumenthalstrasse 41**
**D-6900 Heidelberg (DE)**
Erfinder : **Marx, Matthias, Dr.**
**Seebacher Strasse 49**
**D-6702 Bad Duerkheim (DE)**
Erfinder : **Illers, Karl Heinz, Dr.**
**Huttenstrasse 20**
**D-6701 Otterstadt (DE)**
Erfinder : **Simak, Petr, Dr.**
**Philipp-Scheidemann-Strasse 17**
**D-6700 Ludwigshafen (DE)**

**EP 0 093 334 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Herstellung von vernetzten Kunststoffen nach dem Isocyanat-Polyadditionsverfahren ist bekannt. Nach Angaben der DE-AS 11 96 864 (US 3 099 516) werden hierzu Hydroxylgruppen aufweisende Verbindungen und Polyisocyanate in Gegenwart von Treibmitteln und Katalysatoren verschäumt. Bei geeigneter Wahl der Hydroxylgruppen aufweisenden Polyester, Polyether, Polyetherester, Polyesteramide u. a. und organischen Polyisocyanate sowie durch zusätzliche Mitverwendung von Kettenverlängerungsmitteln, wie z. B. Glykolen oder Diaminen, können nach dieser Methode sowohl elastische wie starre Polyurethane sowie alle dazwischen liegenden Modifikationen hergestellt werden.

Ein Verfahren zur Herstellung von gegebenenfalls zellhaltigen, elastischen Formkörpern mit einer geschlossenen Oberflächenschicht aus Polyurethan-Polyharnstoff-Elastomeren nach dem Prinzip der Reaktionsspritzgußtechnik wird in der DE-AS 26 22 951 (US 4 218 543) beschrieben. Die genannten Systeme bestehen im wesentlichen aus organischen Polyisocyanaten, Polyolen, aktiven aromatischen Di- bzw. Polyaminen, die in o-Stellung zur Aminogruppe gegebenenfalls durch Alkylgruppen substituiert sind und starken Katalysatoren für die Reaktion zwischen Hydroxyl- und Isocyanatgruppen. Derartige Systeme besitzen Startzeiten bis herab zu weniger als einer Sekunde ; der Übergang der flüssigen in die feste Phase erfolgt nahezu schlagartig, was dazu führt, daß das flüssige Reaktionsgemisch in der Form an deren Wandungen gleichsam erstarrt.

Polyurethan-Polyharnstoff-Formulierungen mit etwas verminderter Reaktivität und dadurch verbesserter Fließfähigkeit werden nach Angaben der EP-OS 26 915 erhalten, wenn man als aromatische Diamine 3,3',5,5'-tetraalkylsubstituierte 4,4'-Diamino-diphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß.

Bei diesen Verfahren muß beachtet werden, daß die Hydroxylgruppen im Vergleich zu den Aminogruppen der Aufbaukomponenten gegenüber Polyisocyanaten eine geringere Reaktivität aufweisen. Zur Gewährleistung eines homogenen Reaktionsablaufs muß daher die Polyurethanbildung so stark katalytisch beschleunigt werden, daß sie gleichzeitig mit oder unmittelbar nach Abschluß der Polyharnstoffbildung erfolgen kann und dadurch hohe Molekulargewichte der Polyadditionsprodukte erzielt werden. Hierzu müssen hochwirksame Schwermetallkatalysatoren, z. B. Zinnsalze, der Reaktionsmischung in einer solch großen Menge einverleibt werden, daß diese wiederum die Wärmealterungsbeständigkeit der Polyurethan-Polyharnstoff-Formkörper bei Temperaturen über 140 °C stark beeinträchtigen können, da die Katalysatorrückstände die Rückspaltung der gebildeten Urethangruppen katalysieren.

Es ist ferner bekannt Polyoxyalkylen-polyamine nach dem Prepolymer-Verfahren zu faserbildenden linearen Polyharnstoffelastomeren oder Mischungen aus Glykolen oder aromatischen Aminen und Polyoxyalkylen-polyaminen als Kettenverlängerungsmittel zur Herstellung von gegebenenfalls zelligen Polyurethan-Polyharnstoffen zu verwenden. Hierbei ergaben sich Verarbeitungsprobleme aufgrund der hohen Reaktivität der aliphatisch gebundenen Aminogruppen.

Zur Beseitigung dieser Schwierigkeiten werden nach Angaben der US-PS 3 668 173 die Polyurethan-Polyharnstoffmassen nach dem Prepolymerverfahren hergestellt, wobei die Umsetzung verdünnt in organischen Lösungsmitteln und unter Verwendung von weniger reaktiven aliphatischen Polyisocyanaten durchgeführt wird.

Zur Herstellung von Polyurethanschaumstoffen nach der DE-PS 12 87 308 (US 3 256 213) wird das Polyoxyalkylenpolyamin in Form seines wasserfreien Säuresalzes zusammen mit einer basischen Verbindung in einer der Säure etwa entsprechenden Menge verwendet.

Die EP-OS 33 498 (US-PS 4 269 945) beschreibt die Verwendung von Mischungen aus di- bis tetrafunktionellen Hydroxylverbindungen mit durchschnittlichen OH-Äquivalentgewichten von 30 bis 120 oder aromatischen Aminoverbindungen und Polyoxyalkylen-Polyaminen mit Molekulargewichten kleiner als 1 000 als Kettenverlängerungsmittel.

Die faserbildenden linearen Polyharnstoffelastomeren gemäß DE-OS 15 95 020 (US 3 359 243) werden ebenfalls nach dem zweistufigen Prepolymerverfahren in einem Lösungsmittel hergestellt, das später wieder in einem kostspieligen, separaten Verfahrensschritt abgetrennt werden muß.

Die genannten Verfahren weisen alle gemeinsam den Nachteil auf, daß mit ihrer Hilfe keine Polyharnstoff-Formteile, die im wesentlichen frei von Urethangruppen sind, in einem Reaktionsschritt in Abwesenheit von Lösungsmitteln und üblichen Polyurethankatalysatoren hergestellt werden können.

Aufgabe der vorliegenden Erfindung war es, Polyharnstoff-Formulierungen zu entwickeln, die als Prepolymer- oder vorzugsweise one shot-Systeme, insbesondere nach der Methode der Reaktionsspritzgußtechnik, im folgenden kurz « RIM » genannt, in Abwesenheit von Lösungsmitteln und üblichen Polyurethankatalysatoren, insbesondere Schwermetallsalzkatalysatoren, zu kompakten oder zellhaltigen Formkörpern mit verbesserten, mechanischen Eigenschaften verarbeitet werden können.

Diese Aufgabe konnte überraschenderweise gelöst werden durch ein Verfahren zur Herstellung von gegebenenfalls zellhaltigen Formkörpern auf Basis von Polyharnstoff-Elastomeren durch Umsetzung von

a) organischen Polyisocyanaten,
b) Polyether-polyaminen und

c) Polyaminen

gegebenenfalls in Gegenwart von

d) Treibmitteln,

e) Hilfsmitteln und/oder

f) Zusatzstoffen,

das dadurch gekennzeichnet ist, daß man als Polyether-polyamine (b) Polyoxyalkylen-polyamine mit einem Molekulargewicht von 1 100 bis 16 000 und Strukturen der allgemeinen Formeln

$$H_2N-(R^2O)_x-R^1-NH_2 \qquad (I),$$

$$H_2N-R^1-(OR^2)_x-NH-(R^2O)_y-R^1-NH_2 \qquad (II),$$

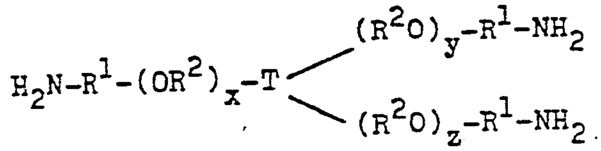

(III)

und/oder

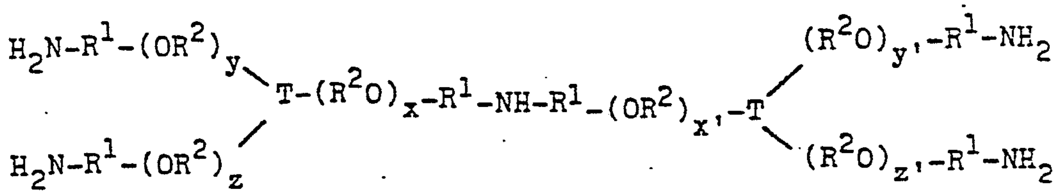

(IV)

in denen bedeuten :

$R^1$ und $R^2$ gleiche oder verschiedene, gegebenenfalls substituierte Alkylenreste mit 2 bis 10 Kohlenstoffatomen, wobei die Alkylenreste $R^2$ der Alkoxygruppen ebenfalls gleich oder verschieden sind,

T ein keine reaktive Wasserstoffatome enthaltender Rest eines trifunktionellen Startermoleküls für die Alkylenoxidpolymerisation und

x, x', z, z', y und y' gleiche oder verschiedene ganze Zahlen größer als null.

und als alkylsubstituierte aromatische Diamine (c) meta-Phenylendiamine der Formeln

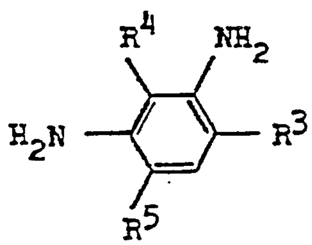

und/oder

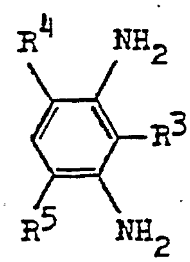

in denen $R^3$ ein verzweigter Alkylrest mit bis zu 10 Kohlenstoffatomen ist, bei dem die Verzweigungsstelle am $C_1$-Kohlenstoffatom sitzt und $R^4$ und $R^5$ gleiche oder verschiedene Alkylreste mit 1 bis 3 Kohlenstoffatomen sind, und/oder Diamino-diphenylmethane der Formel

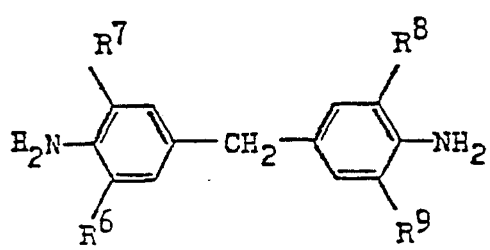

in der $R^6$, $R^7$, $R^8$ und $R^9$ gleich oder verschieden sind und einen Methyl-, Ethyl-, Propyl-, Isopropyl, sek.-Butyl- und tert.-Butylrest bedeuten, wobei jedoch mindestens einer der Reste ein Isopropyl- oder sek.-Butylrest ist, verwendet.

Die nach dem erfindungsgemäßen Verfahren hergestellten Formkörper aus Polyharnstoff-Elastomeren, die im wesentlichen frei sind von Polyurethangruppen — wobei jedoch geringe Anteile an Urethangruppen, die gegebenenfalls durch Modifizierung der organischen Polyisocyanate mit unterge-

ordneten Alkoholmengen zu sogenannten « Quasiprepolymeren » incorporiert werden, die vorzüglichen mechanischen Eigenschaften nicht beeinträchtigen — zeichnen sich durch hohe Zugdehnungs- und Weiterreißfestigkeitswerte, insbesondere jedoch durch eine sehr gute Wärmeform- und Wärmealterungsbeständigkeit aus. Da auf den Zusatz von Katalysatoren verzichtet werden kann, tritt auch eine katalytische Rückspaltung der eventuell über die Quasiprepolymeren eingebrachten Urethangruppen nicht auf.

Besonders vorteilhaft ausgeprägt ist jedoch das rheologische Verhalten des Reaktionsgemisches bei der Herstellung der Formkörper. Durch die Umsetzung der Polyisocyanate mit den sehr reaktiven Polyoxyalkylen-polyaminen steigt die Viskosität des Reaktionsgemisches sehr rasch an, ohne jedoch die Fließfähigkeit zu verlieren. Die langsamer reagierenden primären aromatischen Diamine, die als Hartsegmente fungieren, bewirken ein thermoplastähnliches Spritzgußverhalten, das sich in einer ausgezeichneten Formkörperoberflächenqualität, leichten Entformbarkeit und einer geringen Ausbildung von Schwimmhäuten, wie sie bei Polyurethan-Elastomeren nicht erreichbar sind, äußert.

Zu den für das erfindungsgemäße Verfahren verwendbaren Aufbaukomponenten (a) bis (c) sowie gegebenenfalls (d) bis (f) ist folgendes auszuführen :

Als organische Polyisocyanate (a) kommen aliphatische, cycloaliphatische, araliphatische und vorzugsweise aromatische mehrwertige Isocyanate in Frage. Im einzelnen seien beispielhaft genannt : Alkylendiisocyanate mit 4 bis 12 Kohlenstoffatomen im Alkylenrest, wie 1,12-Dodecandiisocyanat, Tetramethylen-diisocyanat-1,4 und vorzugsweise Hexamethylen-diisocyanat-1,6 ; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate, wie 4,4'-, 2,4'- und 2,2'-Diisocyanatodiphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diphenylmethan- und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d. h. Produkte die durch chemische Umsetzung von Di- und/oder Polyisocyanaten erhalten werden, verwendet. Als modifizierte organische Di- und Polyisocyanate kommen beispielsweise in Betracht : Carbodiimidgruppen aufweisende Polyisocyanate gemäß DE-PS 10 92 007, Allophanatgruppen aufweisende Polyisocyanate, wie sie z. B. in der britischen Patentschrift 994 890, den ausgelegten Unterlagen des belgischen Patents 761 626 und der NL-OS-71 02 524 beschrieben werden, Isocyanuratgruppen aufweisende Polyisocyanate wie sie z. B. in den DE-PS 10 22 789, 12 22 067 und 10 27 394 sowie den DE-OS 19 29 034 und 20 04 048 beschrieben werden, Urethangruppen aufweisende Polyisocyanate, wie sie z. B. in den ausgelegten Unterlagen des belgischen Patents 752 261 oder der US-PS 33 94 164 beschrieben werden, acylierte Harnstoffgruppen aufweisende Polyisocyanate z. B. gemäß DE-PS 12 30 778, Biuretgruppen aufweisende Polyisocyanate z. B. gemäß DE-PS 11 01 394 und GB-PS 889 050 ; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 10 72 956, der US-PS 35 67 765 und der DE-PS 12 31 688 genannt werden.

Vorzugsweise kommen jedoch zur Anwendung : 2,4- und/oder 2,6-Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere 4,4'-Diphenylmethan-diisocyanat Diphenylmethan-diisocyanat-Isomerengemische, Mischungen aus Diphenylmethan-diisocyanaten und Polyphenyl-polymethylen-polyisocyanaten (Roh-MDI) und Gemische aus Toluylendiisocyanaten und Roh-MDI.

Als Polyether-polyamine, die in den Polyharnstoff-Elastomeren als Weichsegmente fungieren, werden bei dem erfindungsgemäßen Verfahren lineare und/oder verzweigte, d. h. di- bis octafunktionelle, vorzugsweise di- bis pentafunktionelle und insbesondere di- bis trifunktionelle Polyoxyalkylen-polyamine mit Molekulargewichten von 1 100 bis 16 000, vorzugsweise von 1 500 bis 12 000, verwendet. Besonders bewährt haben sich und daher vorzugsweise verwendet werden Polyoxyalkylen-polyamine (b) der allgemeinen Formeln

$$H_2N{-}(R^2O)_x{-}R^1{-}NH_2 \quad (I),$$

$$H_2N{-}R^1{-}(OR^2)_x{-}NH{-}(R^2O)_y{-}R^1{-}NH_2 \quad (II),$$

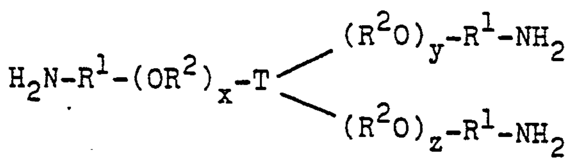

(III)

und/oder

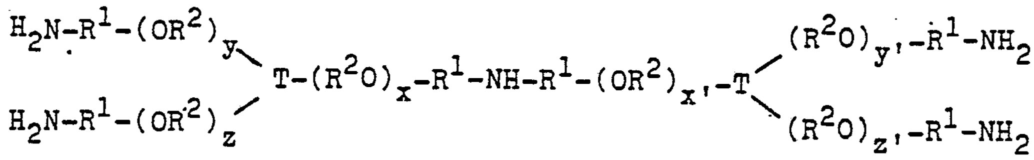

(IV)

in denen bedeuten :

$R^1$ und $R^2$ gleiche oder verschiedene, gegebenenfalls substituierte Alkylenreste mit 2 bis 10, vorzugsweise 2 bis 3 Kohlenstoffatomen, wobei die Alkylenreste $R^2$ der Alkoxygruppen ebenfalls gleich oder verschieden sein können,

T ein von reaktiven Wasserstoffatomen befreiter Rest eines trifunktionellen Startermoleküls für die Alkylenoxid-polymerisation und

x, x', y, y', z und z' gleiche oder verschiedene ganze Zahlen größer als null, vorzugsweise von 4 bis 45 und insbesondere von 10 bis 35, so daß die Summe ein Molekulargewicht von 1100 oder größer ergibt.

Die genannten Polyoxyalkylen-polyamine können einzeln oder als Mischungen eingesetzt werden. Vorzugsweise Anwendung finden Mischungen aus Polyoxyalkylen-polyaminen der Formeln (I) und (II) und solche der Formeln (III) und (IV), wobei die Mischungsverhältnisse von (I) : (II) bzw. (III) : (IV) in den Bereichen von 99,5 : 0,5 bis 20 : 80, vorzugsweise 99,5 : 0,5 bis 50 : 50 liegen.

Die erfindungsgemäß verwendbaren Polyoxyalkylen-polyamine können nach bekannten Verfahren hergestellt werden.

Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

Geeignete Polyoxyalkylen-polyole können ihrerseits erhalten werden durch Addition von einem oder mehreren Alkylenoxiden mit 2 bis 10 Kohlenstoffatomen im Alkylenrest, wie z. B. Tetrahydrofuran, 1,3-Propylenoxid, 1,2- bzw. 2,3-Butylenoxid, Styroloxid und vorzugsweise Ethylenoxid und 1,2-Propylenoxid an ein Startermolekül, das 2 bis 8, vorzugsweise 2 bis 3 reaktive Wasserstoffatome gebunden enthält.

Als Startermolekühle kommen vorzugsweise in Betracht : Wasser, Ammoniak, Alkanolamine, wie z. B. Ethanolamin, Diethanolamin, N-Methyl- und N-Ethyl-ethanolamin, N-Methyl- und N-Ethyl-diethanolamin und Triethanolamin, und insbesondere mehrwertige, vorzugsweise zwei- und/oder dreiwertige Alkohole, wie z. B. Ethylen-, 1,2- und 1,3-Propylen-, Diethylen-, Dipropylen-, 1,4-Butylen-, 1,6-Hexamethylen-glykol, Glycerin, Trimethylolpropan, Pentaerythrit, Sorbit und Saccharose.

Als Polyamine (c) werden bei dem erfindungsgemäßen Verfahren primäre aromatische Diamine verwendet. Zweckmäßigerweise verwendet werden aromatische Diamine, deren primäre Aminogruppen gegenüber Polyisocyanaten keine durch elektronenanziehende Substituenten verursachte verminderte Reaktivität zeigen oder vorteilhafterweise solche aromatische Diamine, deren primäre Aminogruppen sterisch gehindert sind. Insbesondere geeignet sind primäre aromatische Diamine der genannten Art, die bei Raumtemperatur flüssig und mit den Polyoxyalkylen-polyaminen (b) unter den Verarbeitungsbedingungen ganz oder zumindest teilweise mischbar sind. Bewährt haben sich beispielsweise meta-Phenylendiamin und/oder vorzugsweise alkylsubstituierte meta-Phenylendiamine der Formeln

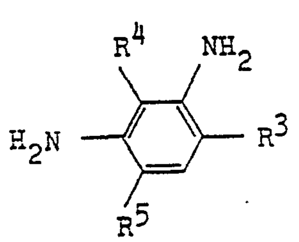

und/oder

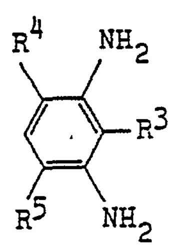

in denen $R^3$ ein Wasserstoffatom oder ein linearer oder verzweigter Alkylrest mit 1 bis 10, vorzugsweise 1 bis 6 Kohlenstoffatomen ist und $R^4$ und $R^5$ gleiche oder verschiedene Alkylreste mit 1 bis 3 Kohlenstoffatomen, wie z. B. ein Methyl-, Ethyl-, Propyl- oder Isopropylrest sind. Geeignet sind insbesondere solche Alkylreste $R^3$, bei denen die Verzweigungsstelle am $C_1$-Kohlenstoffatom sitzt. Neben Wasserstoff seien als Alkylreste $R^3$ beispielhaft genannt : der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht : 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.

Bewährt haben sich ferner Diamino-diphenylmethane, wie z. B. 4,4'- und/oder 2,4'-Diamino-diphenylmethan, 3,3'-di- und 3,3',5,5'-tetra-n-alkylsubstituierte 4,4'-Diamino-diphenylmethane wie z. B. 3,3'-Dimethyl-, 3,3',5,5'-Tetramethyl-, 3,3'-Diethyl-, 3,3',5,5'-Tetraethyl- und 3,3',5,5'-Tetra-n-propyl-4,4'-diamino-diphenylmethan.

Anwendung finden vorteilhafterweise Diamino-diphenyl-methane der Formel

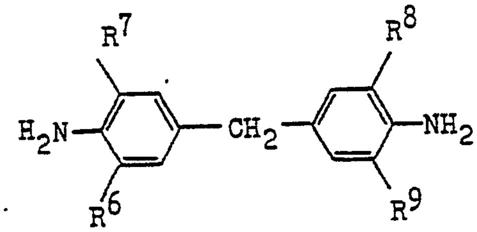

in der $R^6$, $R^7$, $R^8$ und $R^9$ gleich oder verschieden sind und einen Methyl-, Ethyl-, Propyl-, Isopropyl, sek.-Butyl- und tert.-Butylrest bedeuten, wobei jedoch mindestens einer der Reste ein Isopropyl- oder sek. Butylrest sein muß. Die 4,4'-Diamino-diphenylmethane können auch im Gemisch mit Isomeren der Formeln

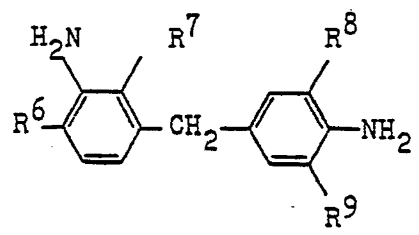

und/oder

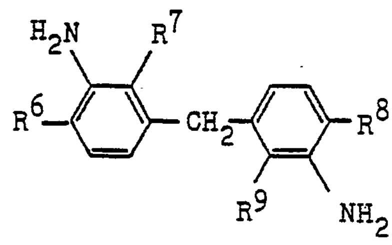

verwendet werden, wobei $R^6$, $R^7$, $R^8$ und $R^9$ die obengenannte Bedeutung haben.

Beispielhaft genannt seien : 3,3',5-Trimethyl-5'-isopropyl-, 3,3',5-Triethyl-5'-isopropyl-, 3,3',5-Trimethyl-5'-sek-butyl-, 3,3',5-Triethyl-5'-sek-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek-butyl-, 3,3'-Diethyl-5,5'-di-sek-butyl-, 3,5-Dimethyl-3',5'-diisopropyl-, 3,5-Diethyl-3',5'-diisopropyl-, 3,5'-Dimethyl-3',5-di-sek-butyl-, 3,5-Diethyl-3',5'-di-sek-butyl-4,4'-diamino-diphenylmethan, 3-Methyl-3',5,5'-triisopropyl-, 3-Ethyl-3',5,5'-triisopropyl-, 3-Methyl-3',5,5'-tri-sek-butyl-, 3-Ethyl-3',5,5'-tri-sek-butyl-4,4'-diamino-diphenylmethan, 3,3'-Diisopropyl-5,5'-di-sek-butyl-, 3,5-Diisopropyl-3',5'-di-sek.-butyl-, 3-Ethyl-5-sek-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek-butyl-4,4'-diaminodiphenylmethan.

Vorzugsweise verwendet werden folgende primären aromatischen Diamine : 2,4-Diethyl-, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert. butyl-, 2,4-Dimethyl-6-isooctyl- und 2,4-Dimethyl-6-cyclohexyl-phenylendiamin-1,3 sowie 3,5-Dimethyl-3',5'-diisopropyl- und 3,3',5,5'-Tetraisopropyl-4,4'-diamino-diphenylmethan.

Die primären aromatischen Diamine können einzeln oder in Form von Mischungen, beispielsweise aus gegebenenfalls alkylsubstituierten 1,3-Phenylendiaminen, Diamino-diphenyl-methanen, 3,3'-di- und/oder 3,3',5,5'-tetraalkylsubstituierten 4,4'-Diamino-diphenylmethanen eingesetzt werden. Außerdem können die primären aromatischen Diamine mit maximal 50 Gew.%, bezogen auf das Gesamtgewicht, primären aromatischen Tri- bis Pentaminen, wie z. B. Polyphenyl-polymethylen-polyaminen gemischt sein, wobei die aromatischen Polyamine zweckmäßigerweise ebenfalls mindestens in einer ortho-Stellung zu den Aminogruppen mit einem Alkylrest substituiert sind.

Die primären aromatischen Diamine oder deren Mischungen kommen beim erfindungsgemäßen Verfahren in Mengen von 5 bis 150 Gew.-Teilen, vorzugsweise 8 bis 100 Gew.-Teilen und insbesondere 10 bis 80 Gew.-Teilen, bezogen auf 100 Gew.-Teile Polyoxyalkylen-polyamin, zur Anwendung.

Zu Treibmitteln (d), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.-%, bezogen auf das Gewicht an Polyoxyalkylen-polyamin.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlofluormethan, Dichlordifluormethan, Dichlormonofluormethan, Dichlortetrafluorethan und 1,1,2-Trichlor-1,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyharnstoff-Formkörpern hängt ab von der Dichte, die man erreichen will sowie gegebenenfalls von der Mitverwendung von Wasser. Im allgemeinen liefern Mengen von 0,5 bis 15 Gew.-%-Teilen, bezogen auf 100 Gew.-Teile Polyoxyalkylen-polyamin zufriedenstellende Ergebnisse.

Der Reaktionsmischung können gegebenenfalls auch noch Hilfsmittel (e) und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin oder stearinsaures Diethanolamin, Salze von Sulfonsäuren, z. B. Alkali- oder Ammoniumsalze von Dodecylbenzol- oder Dinaphthylmethandisulfonsäure und Ricinolsäure ; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile Polyoxyalkylen-polyamin angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt : anorganische Füllstoffe wie silikatische Mineralien, beispielsweise Schichtsilikate, wie Antigorit, Serpentin, Hornblenden, Amphibole, Chrisotil, Talkum ; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u. a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht : Kohle, Melamin, Kollophonium, Cyclopentadienylharze und Pfropfpolymerisate auf Styrol-Acrylnitrilbasis, die durch *in situ* Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt und danach aminiert werden sowie Filler-polyoxyalkylen-polyamine, bei denen wäßrige Polymerdispersionen in Polyoxyalkylen-polyamindispersionen übergeführt werden.

Die anorganischen und organischen Füllstoffe können einzeln oder als Gemische verwendet werden. Vorzugsweise Anwendung finden stabile Füllstoff-Polyoxyalkylen-polyamin-Dispersionen, bei denen die Füllstoffe in Gegenwart von Polyoxyalkylen-polyaminen *in situ* mit hohen örtlichen Energiedichten auf eine Teilchengröße kleiner als 7 µm zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Polyisocyanat-Polyoxyalkylen-polyamin-Mischung einverleibt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gewichtsteile, vorzugsweise 5 bis 25 Gewichtsteile der genannten Flammschutzmittel für jeweils 100 Gewichtsteile an Polyoxyalkylen-polyamin zu verwenden.

Nähere Angaben über die obengenannten anderen üblichen Hilfs- und Zusatzstoffe sind der Fachliteratur, beispielsweise der Monographie von J. H. Saunders und K. C. Frisch « High Polymers » Band XVI, Polyurethanes, Teil 1 und 2, Verlag Interscience Publishers 1962 bzw. 1964, zu entnehmen.

Zur Herstellung der gegebenenfalls zellhaltigen Formkörper auf Basis von Polyharnstoff-Elastomeren werden die organischen Polyisocyanate, Polyoxyalkylen-polyamine und primären aromatischen Diamine in solchen Mengen zur Umsetzung gebracht, daß das Äquivalenz-Verhältnis von NCO-Gruppen der Polyisocyanate (a) zur Summe der Aminogruppen der Polyoxyalkylen-polyamine (b) und primären aromatischen Diamine (c) 1 : 0,85 bis 1,25, vorzugsweise 1 : 0,95 bis 1,15 beträgt.

Die Herstellung der zellhaltigen und vorzugsweise kompakten Polyharnstoff-Formkörper erfolgt nach dem Prepolymer- oder vorzugsweise nach dem one shot-Verfahren mit Hilfe der bekannten Reaktionsspritzguß-Technik. Diese Verfahrensweise wird beispielsweise beschrieben von Piechota und Röhr in « Integralschaumstoffe », Carl-Hanser-Verlag, München, Wien 1975 ; D. J. Prepelka und J. L. Wharton in Journal of Cellular Plastics, März/April 1975, Seiten 87 bis 98 und U. Knipp in Journal of Cellular Plastics, März/April 1973, Seiten 76 bis 84. Die Formulierungen lassen sich jedoch auch zu Gießelastomeren und Integralschaumstoffen auf konventionelle Art verarbeiten.

Bei Verwendung einer Mischkammer mit mehreren Zulaufdüsen können die Ausgangskomponenten

einzeln zugeführt und in der Mischkammer intensiv vermischt werden. Als besonders vorteilhaft hat es sich erwiesen nach dem Zweikomponenten-Verfahren zu arbeiten und die primären aromatischen Diamine in den Polyoxyalkylen-polyaminen zu lösen und gegebenenfalls mit Treibmitteln, Hilfs- und Zusatzstoffen in der Komponente A zu vereinigen und als Komponente B die organischen Polyisocyanate zu verwenden. Vorteilhaft ist hierbei beispielsweise, daß die Komponenten A und B getrennt gelagert und raumsparend transportiert werden können und bei der Verarbeitung nur noch in den entsprechenden Mengen gemischt werden müssen, wobei auf die Mitverwendung von üblichen Katalysatoren zur Beschleunigung Polyisocyanataddition verzichtet werden kann.

Die Menge des in die Form eingebrachten Reaktionsgemisches wird so bemessen, daß die erhaltenen mikrozellularen bzw. kompakten Formkörper eine Dichte von 0,8 bis 1,4 g/cm$^3$, vorzugsweise von 0,9 bis 1,35 g/cm$^3$ und die zellhaltigen Formkörper eine Dichte von 0,2 bis 1,1 g/cm$^3$, vorzugsweise von 0,25 bis 0,7 g/cm$^3$ aufweisen. Die Ausgangskomponenten werden mit einer Temperatur von 15 bis 80 °C, vorzugsweise von 20 bis 55 °C in die Form eingebracht. Die Formtemperatur beträgt zweckmäßigerweise 20 bis 90 °C, vorzugsweise 30 bis 75 °C, gegebenenfalls kann es vorteilhaft sein, übliche Formtrennmittel, beispielsweise auf Wachs- oder Silikonbasis, nach jedem 3. bis 10. Formfüllvorgang zur Verbesserung der Entformung, einzusetzen. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhältlichen kompakten bzw. mikrozellularen Polyharnstoff-Formkörper eignen sich insbesondere zur Verwendung in der Automobilindustrie, beispielsweise als Stoßstangenabdeckungen und Karosserieteile wie Kotflügel, Spoiler und Radkästenverbreiterungen sowie technische Gehäuseteile, Laufrollen und Schuhsohlen. Die zellhaltigen Schaumstoffe finden beispielsweise als Armlehnen, Kopfstützen, Sicherheitsabdeckungen im Automobilinnenraum sowie als Motorrad- und Fahrradsättel und Deckschichten in Verbundschaumstoffen Anwendung.

Die in den Beispielen genannten Teile beziehen sich auf das Gewicht.

## Beispiel 1

A-Komponente

In 65,0 Gew.-Teilen eines Blockcopolyoxyalkylen-polyamins mit einer Aminzahl von 27 und einer OH-Zahl von 0, das hergestellt wurde durch Aminierung eines Polyether-polyols auf Basis von Dipropylenglykol-Propylenoxid-Ethylenoxid, wurden 35,0 Gew.-Teile 3,3',5,5'-Tetraisopropyl-4,4'-diamino-diphenylmethan in der Wärme gelöst und intensiv gemischt.

B-Komponente

Urethanmodifiziertes Polyisocyanat mit einem NCO-Gehalt von 23 Gew.%, das hergestellt wurde durch Umsetzung von 4,4'-Diphenylmethan-diisocyanat und Dipropylen-glykol.

100 Gew.-Teile der A-Komponente und 44,5 Gew.-Teile der B-Komponente — entsprechend einem Isocyanatindex von 105 — wurden nach dem RIM-Verfahren auf einer Hochdruckdosieranlage vom Typ ®Puromat 30 der Elastogran-Maschinenbau verarbeitet.

Die Temperatur der A- und B-Komponenten betrug 50 °C ; die Plattenform (500 × 300 × 4 mm) war ebenfalls auf 50 °C temperiert.

An der Testplatte wurden die in der folgenden Tabelle zusammengefaßten mechanischen Eigenschaften gemessen.

## Beispiel 2

A-Komponente

In 65,0 Gew.-Teilen eines Polyoxypropylen-diamins mit einem mittleren Molekulargewicht von 2 000 und einer Aminzahl von 57 wurden 35,0 Gew.-Teile 3,3',5,5'-Tetraisopropyl-4,4'-diamino-diphenylmethan in der Wärme gelöst und intensiv vermischt.

B-Komponente : analog Beispiel 1

100 Gew.-Teile der A-Komponente und 50 Gew.-Teile der B-Komponente — entsprechend einem Isocyanatindex von 105 — wurden analog den Angaben von Beispiel 1 zu Testplatten verarbeitet.

Die hieran gemessenen mechanischen Eigenschaften sind in der folgenden Tabelle zusammengefaßt.

## Beispiel 3a und 3b

A-Komponente : analog Beispiel 1.

B-Komponente : partiell carbodiimidisiertes 4,4'-Diphenylmethan-diisocyanat mit einem NCO-Gehalt von

29,5 Gew.%.

100 Gew.-Teile der auf 70 °C temperierten A-Komponente und 36 Gew.-Teile der auf 50 °C temperierten B-Komponente wurden analog den Angaben von Beispiel 1 in einer 50 °C warmen metallischen Form mit den inneren Abmessungen 500 × 300 × 4 mm zu Testplatten verarbeitet.

Die an den Testplatten gemessenen mechanischen Eigenschaften sind in der folgenden Tabelle zusammengefaßt.

Gemäß Beispiel 3a war die Testplatte ungetempert, während sie nach Beispiel 3b nach der Herstellung bei 120 °C 1 Stunde getempert wurde.

Beispiel 4

A-Komponente : analog Beispiel 1.

B-Komponente : Umsetzungsprodukt aus 4,4′-Diphenylmethan-di-isocyanat und einem Blockcopolyoxyalkylen-polyamin mit einer Aminzahl von 27 und einer OH-Zahl von 0, hergestellt durch Aminierung eines Dipropylenglykol-Propylenoxid-Ethylenoxid-polyols, mit einem NCO-Gehalt von 16,9 Gew.%

100 Gew.-Teile der A-Komponente und 62,8 Gew.-Teile der B-Komponente wurden analog Beispiel 1 zu Testplatten verarbeitet.

Die A- und B-Komponente sowie die metallische Plattenform waren jeweils auf 50 °C temperiert.

Die an den Testplatten gemessenen mechanischen Eigenschaften sind in der folgenden Tabelle genannt.

Beispiel 5a und 5b

A-Komponente : Mischung aus 80 Gew.-Teilen 1-Methyl-3,5-diethylphenylendiamin-2,4 und 20 Gew.-Teile 1-Methyl-3,5-diethyl-phenylendiamin-2,6.

B-Komponente : Umsetzungsprodukt aus 4,4′-Diphenylmethan-diisocyanat und einem Blockcopolyoxyalkylen-polyamin mit einer Aminzahl von 27 und einer OH-Zahl von 0, hergestellt durch Aminierung eines Dipropylenglykol-Propylenoxid-Ethylenoxid-polyols, mit einem NCO-Gehalt von 11,4 Gew.%.

100 Gew.-Teile der auf 50 °C temperierten A-Komponente und 434 Gew.-Teile der auf 70 °C temperierten B-Komponente — entsprechend einem Isocyanatindex von 105 — wurden analog Beispiel 1 in einer auf 50 °C warmen Metallform zu Testplatten verarbeitet.

Die an den Testplatten gemessenen mechanischen Eigenschaften sind in der folgenden Tabelle zusammengefaßt.

Nach Beispiel 5a war die Testplatte ungetempert, während sie gemäß Beispiel 5b nach der Herstellung 1 Stunde bei 120 °C getempert wurde.

Vergleichsbeispiel

A-Komponente :

In 63,8 Gew.-Teilen eines Blockcopolyether-polyols auf Basis Dipropylenglykol-Propylenoxid-Ethylenoxid mit einer OH-Zahl von 29 wurden 35,0 Gew.-Teile 3,3′,5,5′-Tetraisopropyl-4,4′-diamino-diphenylmethan in der Wärme gelöst und nach dem Abkühlen auf 25 °C mit 1 Gew.-Teil einer 33 gew.-%igen Lösung von Diazabicyclooctan in Dipropylenglykol und 0,2 Gew.-Teilen Dibutylzinndilaurat intensiv vermischt.

B-Komponente : analog Beispiel 1

100 Gew.-Teile der A-Komponente und 45,8 Gew.-Teile der B-Komponente — entsprechend einem Isocyanatindex von 105 — wurden analog den Angaben von Beispiel 1 zu Prüfplatten verarbeitet.

Die daran gemessenen mechanischen Eigenschaften sind in der folgenden Tabelle zusammengefaßt.

(Siehe Tabelle Seite 10 f.)

Tabelle : Mechanische Eigenschaften der RIM-Prüfplatten

| Eigenschaften | | Beispiele | | | | | | | Vergleichsbeispiel |
|---|---|---|---|---|---|---|---|---|---|
| | | 1 | 2 | 3a | 3b | 4 | 5a | 5b | |
| Rohdichte | [g/cm$^3$] | 1,05 | 1,05 | 1,06 | 1,06 | 1,07 | 1,10 | 1,10 | 1,05 |
| Knicktest[1)] | [sec] | 30 | 40 | 29 | 29 | 29 | 30 | 30 | 30 |
| Reißdehnung | [%] | 300 | 290 | 373 | 342 | 428 | 300 | 270 | 300 |
| Reißfestigkeit | [N/mm$^2$] | 27 | 29 | 27 | 28 | 28 | 27 | 31 | 32 |
| Weiterreißfestigkeit | [N/mm] | 106 | 101 | 101 | 113 | 82 | 89 | 94 | 126 |
| Wärmeformbeständigkeit[2)] | [$^oC$] | 165 | 160 | 122 | 150 | 149 | 161 | 172 | 123 |
| Härte | [Shore D] | 63 | 63 | 62 | 63 | 56 | 67 | 67 | 62 |
| Biege-E-Modul | [N/mm$^2$] | | | | | | | | |
| -30$^oC$ | | 1200 | 1860 | 1030 | 1020 | 640 | - | - | 1120 |
| +23$^oC$ | | 580 | 500 | 520 | 530 | 300 | - | - | 540 |
| +65$^oC$ | | 410 | 240 | 330 | 320 | 240 | - | - | 360 |

[1)] die Prüfplatten zeigten zu diesem Zeitpunkt beim Umbiegen um 180 °C keine Rißbildung
[2)] nach ISO-R-75 Methode B

**Patentansprüche**

1. Verfahren zur Herstellung von Formkörpern auf Basis von Polyharnstoff-Elastomeren durch Umsetzung von
a) organischen Polyisocyanaten,
b) Polyether-polyaminen und
c) alkylsubstituierten aromatischen Diaminen
dadurch gekennzeichnet, daß man als Polyether-polyamine (b) Polyoxyalkylen-polyamine mit einem Molekulargewicht von 1 100 bis 16 000 und Strukturen der allgemeinen Formeln

$$H_2N—(R^2O)_x—R^1—NH_2 \quad (I),$$

$$H_2N—R^1—(OR^2)_x—NH—(R^2O)_y—R^1—NH_2 \quad (II),$$

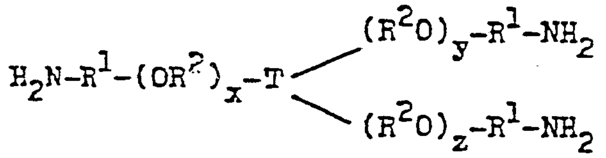
(III)

und/oder

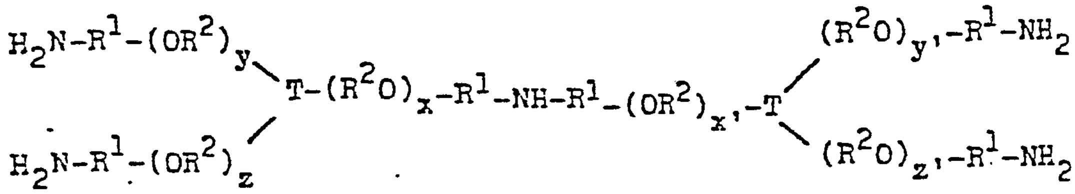
(IV)

in denen bedeuten :
$R^1$ und $R^2$ gleiche oder verschiedene, gegebenenfalls substituierte Alkylenreste mit 2 bis 10 Kohlenstoffatomen, wobei die Alkylenreste $R^2$ der Alkoxygruppen ebenfalls gleich oder verschieden sind,
T ein keine reaktive Wasserstoffatome enthaltender Rest eines trifunktionellen Startermoleküls für die Alkylenoxidpolymerisation und
x, x', z, z', y und y' gleiche oder verschiedene ganze Zahlen größer als null.
und als alkylsubstituierte aromatische Diamine (c) meta-Phenylendiamine der Formeln

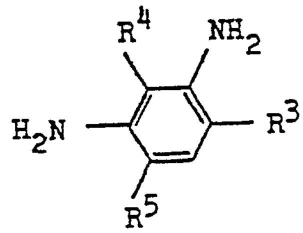
und/oder
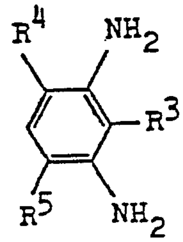

in denen $R^3$ ein verzweigter Alkylrest mit bis zu 10 Kohlenstoffatomen ist, bei dem die Verzweigungsstelle am $C_1$-Kohlenstoffatom sitzt und $R^4$ und $R^5$ gleiche oder verschiedene Alkylreste mit 1 bis 3 Kohlenstoffatomen sind, und/oder Diamino-diphenylmethane der Formel

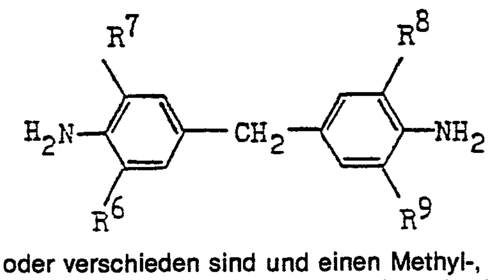

in der $R^6$, $R^7$, $R^8$ und $R^9$ gleich oder verschieden sind und einen Methyl-, Ethyl-, Propyl-, Isopropyl, sek.-Butyl- und tert.-Butylrest bedeuten, wobei jedoch mindestens einer der Reste ein Isopropyl- oder sek.-Butylrest ist, verwendet.

2. Verfahren nach Anspruch 1, dadurch gekennzeichnet, daß man die Umsetzung in Gegenwart von (d) Treibmitteln und unter Verdichtung in einer geschlossenen Form durchführt.

3. Verfahren nach Anspruch 1 oder 1 und 2, dadurch gekennzeichnet, daß zur Herstellung der gegebenenfalls zellhaltigen Formkörper auf Basis von Polyharnstoff-Elastomeren zusätzlich e) Hilfsmittel

und/oder f) Zusatzstoffe mitverwendet werden.

4. Verfahren nach Anspruch 1 oder 1 und 2, dadurch gekennzeichnet, daß die Umsetzung in Abwesenheit von üblichen Katalysatoren zur Beschleunigung der Polyisocyanataddition durchgeführt wird.

5. Verfahren nach Anspruch 1 oder 1 und 2, dadurch gekennzeichnet, daß die Komponenten a) bis c) und gegebenenfalls d) bis f) als one-shot-System nach der Reaktionsspritzgußtechnik verarbeitet werden.

6. Verfahren nach Anspruch 1 oder 1 und 2, dadurch gekennzeichnet, daß man pro 100 Gew.-Teile Polyoxyalkylenpolyamine (b) 5 bis 150 Gew.-Teile primäre aromatische Diamine (c) verwendet und das Äquivalenzverhältnis von NCO-Gruppen der Polyisocyanate (a) zur Summe der Aminogruppen der Polyoxyalkylen-polyamine (b) und aromatischen Diamine (c) 1 : 0,85 bis 1,25 beträgt.

7. Verfahren nach Anspruch 1 oder 1 und 2, dadurch gekennzeichnet, daß man als alkylsubstituierte aromatische Diamine (c) 2,4-Dimethyl-6-tert. butyl-, 2,4-Dimethyl-6-isooctyl-, 2,4-Dimethyl-6-cyclohexyl-phenylendiamin-1,3, 3,5-Dimethyl-3',5'-diisopropyl- und/oder 3,3',5,5'-Tetraisopropyl-4,4'-diaminodiphenylmethan verwendet.

## Claims

1. A process for the preparation of molded parts based on polyurea elastomers by reacting
   a) organic polyisocyanates,
   b) polyether polyamines, and
   c) alkyl-substituted aromatic diamines,

wherein the polyether polyamines (b) used are polyoxyalkylene polyamines having a molecular weight of from 1 100 to 16 000 and the general structural formulae

$$H_2N—(R^2O)_x—R^1—NH_2 \quad (I),$$

$$H_2N—R^1—(OR^2)_x—NH—(R^2O)_y—R^1—NH_2 \quad (II),$$

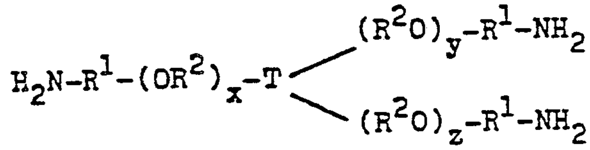

(III)

and/or

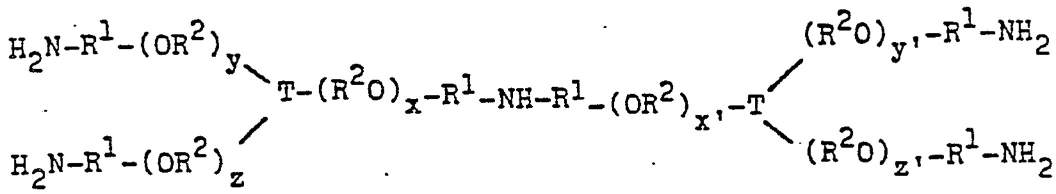

(IV)

where

$R^1$ and $R^2$ are identical or different optionally substituted alkylene radicals of 2 to 10 carbon atoms, the alkylene radicals $R^2$ of the alkoxy groups also being identical or different,

T is a radical of a trifunctional initiator molecule for the alkylene oxide polymerization, which radical does not contain any reactive hydrogen atoms, and

x, x', z, z', y and y' are identical or different integers greater than 0,

and the alkyl-substituted aromatic diamines (c) used are meta-phenylene diamines of the formulae

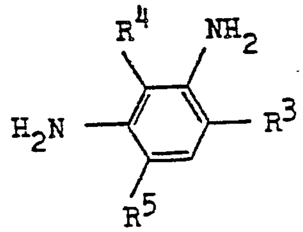

and/or

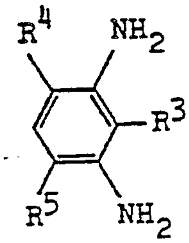

where $R^3$ is a branched alkyl of up to 10 carbon atoms, in which the branching point is at the $C_1$-carbon atom, and $R^4$ and $R^5$ are identical or different alkyls of 1 to 3 carbon atoms, and/or diaminodiphenyl-

methanes of the formula

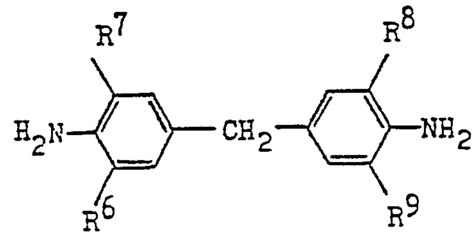

where $R^6$, $R^7$, $R^8$ and $R^9$ are identical or different and each denote methyl, ethyl, propyl, isopropyl, sec-butyl and tert-butyl, but at least one of the radicals is isopropyl or sec-butyl.

2. A process as claimed in claim 1, wherein the reaction is carried out in the presence of (d) blowing agents, while increasing the density in a closed mold.

3. A process as claimed in claim 1 or claims 1 and 2, wherein (e) auxiliaries and/or (f) additives are additionally used to prepare the cellular or non-cellular molded parts based on polyurea elastomers.

4. A process as claimed in claim 1 or claims 1 and 2, wherein the reaction is carried out in the absence of conventional catalysts for accelerating polyisocyanate addition.

5. A process as claimed in claim 1 or claims 1 and 2, wherein components (a) to (c) and, if desired, (d) to (f) are processed as a one-shot system by a reaction injection molding technique.

6. A process as claimed in claim 1 or claims 1 and 2, wherein from 5 to 150 parts by weight of primary aromatic diamines (c) are used per 100 parts by weight of polyoxyalkylene polyamines (b), and the equivalency ratio of NCO groups of polyisocyanurates (a) to the sum of the amino groups of the polyoxyalkylene polyamines (b) and aromatic diamines (c) is 1 : 0,85-1.25.

7. A process as claimed in claim 1 or claims 1 and 2, wherein the alkyl-substituted aromatic diamines (c) are 2,4-dimethyl-6-tert-butyl phenylenediamine-1,3, 2,4-dimethyl-6-isooctyl phenylenediamine-1,3, 2,4-dimethyl-6-cyclohexyl phenylenediamine-1,3, 3,5-dimethyl-3',5'-diisopropyl 4,4-diaminodiphenylmethane and/or 3,3',5,5'-tetraisopropyl 4,4'-diaminodiphenylmethane.

**Revendications**

1. Procédé pour la fabrication de corps moulés à base de polyurée élastomère par réaction de
   a) polyisocyanates organiques,
   b) polyéther-polyamines et
   c) diamines aromatiques alkylsubstituées,

caractérisé en ce qu'on utilise, comme polyéther-polyamines (b), ayant un poids moléculaire de 1 100 à 16 000 et des structures correspondant aux formules générales

$$H_2N{-}(R^2O)_x{-}R^1{-}NH_2 \quad (I),$$

$$H_2N{-}R^1{-}(OR^2)_x{-}NH{-}(R^2O)_y{-}R^1{-}NH_2 \quad (II),$$

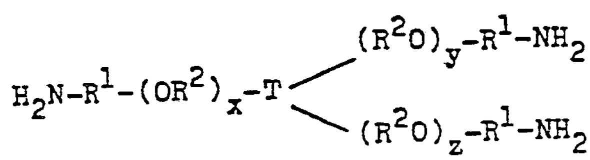

(III)

et/ou

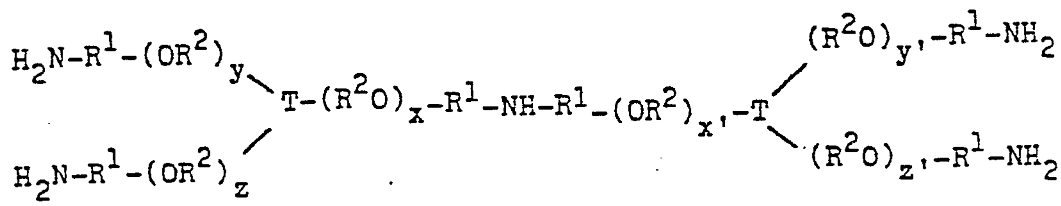

(IV)

dans lesquelles

$R^1$ et $R^2$, identiques ou différents, représentent des radicaux alkylène à 2-10 atomes de carbone éventuellement substitués, les radicaux alkylène $R^2$ des groupements alcoxy étant également identiques ou différents,

T est un radical, ne contenant pas d'atomes d'hydrogène réactifs, d'une molécule de déclenchement

trifonctionnelle pour la polymérisation de l'oxyde d'alkylène et

x, x', z, z', y et y' sont des nombres entiers, semblables ou différents, supérieurs à zéro et, comme diamines aromatiques alkylsubstituées (c), des métaphénylène-diamines de formules

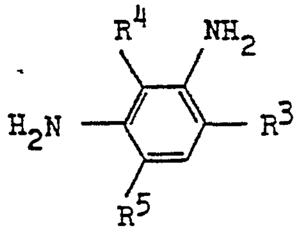

et/ou

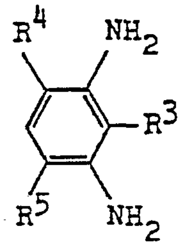

dans lesquelles $R^3$ est un radical alkyle ramifié, contenant jusqu'à 10 atomes de carbone, le point de ramification se trouvant sur l'atome de carbone $C_1$ et $R^4$ et $R^5$ étant des radicaux à 1-3 atomes de carbone identiques ou différents, et/ou des diaminodiphénylméthanes de formule

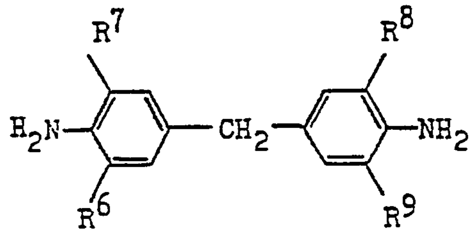

dans laquelle $R^6$, $R^7$, $R^8$ et $R^9$ sont identiques ou différents et représentent chacun un radical méthyle, éthyle, propyle, isopropyle, butyle secondaire ou butyle tertiaire, l'un au moins des radicaux étant toutefois un radical isopropyle ou butyle secondaire.

2. Procédé selon la revendication 1, caractérisé en ce qu'on conduit la réaction en présence de (d) agents moussants et sous compression dans un moule fermé.

3. Procédé selon la revendication 1 ou 2, caractérisé en ce que pour la fabrication de corps moulés éventuellement cellulaires à base de polyurée élastomère, on utilise simultanément et en plus (e) des substances auxiliaires et/ou (f) des adjuvants.

4. Procédé selon la revendication 1 ou 2, caractérisé en ce que la réaction est conduite en l'absence de catalyseurs usuels pour l'accélération de l'addition de polyisocyanates.

5. Procédé selon la revendication 1 ou 2, caractérisé en ce que les composants (a) à (c) et éventuellement (d) à (f) sont mis en œuvre en tant que système « one-shot » (en une seule fois), suivant la technique de moulage réactif par injection.

6. Procédé selon la revendication 1 ou 2, caractérisé en ce qu'on utilise, pour 100 parties en poids de polyoxyalkylène-polyamines (b), 5 à 150 parties en poids de diamines aromatiques primaires (c) et le rapport d'équivalence des groupements NCO des polyisocyanates (a) à la somme des groupements amino des polyoxyalkylène-polyamines (b) et des diamines aromatiques (c) est porté à 1 : 0,85 à.1,25.

7. Procédé selon la revendication 1 ou 2, caractérisé en ce qu'on utilise, comme diamines aromatiques alkylsubstituées (c), la 2,4-diméthyl-6-tert.-butyl-, la 2,4-diméthyl-6-isooctyl-, la 2,4-diméthyl-6-cyclohexylphénylènediamine-1,3, le 3,5-diméthyl-3',5'-diisopropyl- et/ou le 3,3',5,5'-tétraisopropyl-4,4'-diaminodiphénylméthane.